# EUROPEAN PATENT APPLICATION

(11) **EP 1 219 405 A1**
(43) Date of publication of application: **03.07.2002**
(21) Application number: 01204545.6
(22) Date of filing: 26.11.2001
(51) Int. Cl.: B29C 59/00

(54) **Tear seam for vehicle panel**

(30) Priority: 21.12.2000 GB 0031169
(71) Applicant: Delphi Technologies, Inc., Troy, MI 48007 (US)
(72) Inventor: Kanksteiner, Udo, 58456 Witten (DE); Bender, Thomas, 40470 Düsseldorf (DE); Blockhaus, Franck, 42553 Velbert-Neviges (DE); Heitdress, Rudolf, 42103 Wuppertal (DE)
(74) Representative: Denton, Michael John

(57) **Abstract**

A method of, and apparatus for, forming a tear seam (12) in an interior panel (16) of a motor vehicle comprising the steps of securing the interior panel in a workstation with the inner surface (14) of the interior panel being exposed; and moving knife means (18,20) across the inner surface to form a tear seam which is substantially V-shaped in cross-section. Achieves accurate positioning the tear seam.

## Description

### Technical Field

The present invention relates to a method of forming a tear seam in an interior panel of a motor vehicle, and to apparatus for carrying out the method.

### Background of the Invention

An instrument panel of a motor vehicle may include an airbag module mounted behind the panel. The panel includes a door which can open on inflation of the airbag. It is desirable to produce the panel such that the airbag door is hidden or substantially invisible when the panel is viewed by an occupant of the vehicle. It is also desirable to produce the panel so that the position of, and area defining, the tear line for the airbag door is predetermined. To achieve these desires, it is known to form a tear seam in the inner surface of the outer skin of the instrument panel. However, some materials (for example, polyurethane spray skin) used for forming the skin have properties which make the formation of the tear seam difficult, and hence affect the position of the tear when the airbag door opens. In these cases, it has been found that a single knife cut is not sufficient to provide an effective tear seam. Alternative methods, such as the use of a router, have been used but these have the disadvantages of producing a visible line, inaccurate seam formation, and dust creation.

### Summary of the Invention

It is an object of the present invention to overcome the above mentioned disadvantages.

A method of forming a tear seam in an interior panel of a motor vehicle in accordance with the present invention comprises the steps of securing the interior panel in a workstation with the inner surface of the interior panel being exposed; and moving knife means across the inner surface to form a tear seam which is substantially V-shaped in cross-section.

The present invention also includes apparatus for carrying out the method.

The present invention forms a tear seam which is V-shaped, and which is accurately positioned on the inner surface of the interior panel.

### Brief Description of the Drawings

The present invention will now be described, by way of example, with reference to the accompanying drawings, in which:-
Figure 1 is a perspective view of a first embodiment of apparatus for performing the method of the present invention; and
Figure 2 is a side view of a second embodiment of apparatus for performing the method of the present invention.

### Description of the Preferred Embodiment

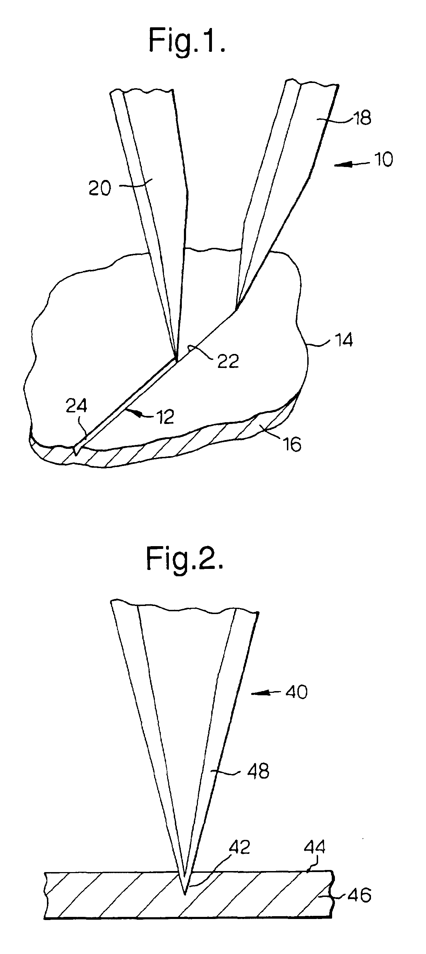

Referring to Figure 1, the apparatus 10 is for forming a tear seam 12 in the inner surface 14 of the skin 16 of an instrument panel of a motor vehicle. The apparatus 10 comprises a workstation; and a first knife 18 and a second knife 20 which are fixed at an angle relative to one another, and at an angle to the inner surface 14 of the skin 16. The knives 18,20 are set to form the tear seam 12 with a substantially V-shaped cross-section. The skin 16 is secured in the workstation by any suitable means, with the inner surface 14 exposed. The knives 18,20 are then moved across the inner surface 14 by any suitable means. The first knife 18 cuts one side surface 22 of the tear seam 12, and the second knife 20 then cuts the second surface 24 of the tear seam to create the V-shape for the tear seam.

Referring to Figure 2, the apparatus 40 is for forming a tear seam 42 in the inner surface 44 of the skin 46 of an instrument panel of a motor vehicle. The apparatus 40 comprises a workstation, and a knife 48 which is V-shaped. The skin 46 is secured in the workstation by any suitable means, with the inner surface 44 exposed. The knife 48 is moved across the inner surface 44 of the skin 46 and is subjected simultaneously to ultrasonic vibration. As a result, the tear seam 42 is formed with a substantially V-shaped cross-section with minimal cutting force.

In both of these arrangements, a tear seam is formed which is accurately positioned and is substantially V-shaped in cross-section. The tear seam is substantially invisible when viewed by a vehicle occupant, and is formed by a method which does not create dust. The present invention has particular application for forming a tear seam in a skin formed from sprayed or cast polyurethane or similar materials, and produces an efficient team seam in materials previously found to be difficult. The present invention may be used for forming a tear seam in any interior panel of a motor vehicle.

## Claims

1. A method of forming a tear seam in an interior panel of a motor vehicle comprising the steps of securing the interior panel in a workstation with the inner surface of the interior panel being exposed; and moving knife means across the inner surface to form a tear seam which is substantially V-shaped in cross-section.

2. A method as claimed in Claim 1, comprising the additional step of subjecting the knife means to ultrasonic vibration as the knife means moves across the inner surface.

3. A method as claimed in Claim 1 or Claim 2, wherein the knife means comprises a single knife which is V-shaped, the single knife moving across the inner surface to form the tear seam.

4. A method as claimed in Claim 1 or Claim 2, wherein the knife means comprises a first knife and a second knife which are fixed at an angle relative to one another, the first knife moving across the inner surface to form one side of the tear seam, and the second knife moving across the inner surface to form the other side of the tear seam.

5. Apparatus for forming a tear seam in an interior panel of a motor vehicle comprising a workstation for securing the interior panel with the inner surface of the interior panel being exposed; and knife means movable across the inner surface to form a tear seam which is substantially V-shaped in cross-section.

6. Apparatus as claimed in Claim 5, further comprising means for subjecting the knife means to ultrasonic vibration as the knife means moves across the inner surface.

7. Apparatus as claimed in Claim 5 or Claim 6, wherein the knife means comprises a single knife which is V-shaped.

8. Apparatus as claimed in Claim 5 or Claim 6, wherein the knife means comprises a first knife and a second knife which are fixed at an angle relative to one another, the first knife being movable across the inner surface to form one side of the tear seam, and the second knife being movable across the inner surface to form the other side of the tear seam.
